# EUROPEAN PATENT SPECIFICATION

(11) **EP 3 812 712 B1**
(45) Date of publication and mention of the grant of the patent: **24.04.2024**
(21) Application number: 19204453.5
(22) Date of filing: 21.10.2019
(51) Int. Cl.: G01F 1/7086, G01F 1/712, G01P 5/18, G01P 5/26, G01N 21/45, G01N 21/41, G01F 1/661

(54) **FLUID FLOW ANALYSIS**
FLÜSSIGKEITSFLUSSANALYSE
ANALYSE DE FLUX DE FLUIDE

(43) Date of publication of application: 28.04.2021
(73) Proprietor: Universität der Bundeswehr München, 85579 Neubiberg (DE)
(72) Inventor: Thele, Max, 68330 Huningue (FR); Mundt, Christian, 81739 München (DE); Sander, Tobias, 85521 Ottobrunn (DE)
(74) Representative: Koplin, Moritz

(56) References cited:
- EP-A2- 0 952 431
- EP-A2- 1 205 736
- WO-A1-91/18280
- WO-A2-01/90700
- DE-A1- 3 909 621
- GB-A- 2 352 033
- US-A1- 2004 113 081
- US-A1- 2007 044 572
- US-A1- 2011 106 397
- US-A1- 2014 130 606
- US-A1- 2019 293 543

## Description

### Technical Field

The present disclosure relates to a sensor arrangement for measuring properties of a fluid flow. More particularly, the present invention relates to a nonintrusive analysis of a fluid flow based on differential interferometry.

### Background Art

Differential interferometry allows detecting density gradients in a fluid flow (cf. Smeets, Guenter and Avalos George. "Laser-Differential Interferometer Applications in Gas Dynamics." (1996)).

Moreover, US 2004/113081 A1 relates to measuring the velocity of a flowing gas by detecting the pattern of infrared absorption of the gas stream at two locations spaced apart in the direction of flow and measuring the time lapse between the sensing of the same radiation pattern by the first and second sensors. The velocity can be derived from the time lapse and the known distance between the sensors.

US 2019/0293543 A1 relates to measuring the properties of a liquid by exploiting the power modulation a laser light beam undergoes due to the retroreflection of the laser light beam itself towards the laser cavity from which the laser is generated when this laser light is directed towards a transparent conduit through which the liquid for which the properties are to be measured flows.

WO 01/90700 A2 relates to monitoring the flow rate of a fluid stream by heating the stream with a heating member to induce a change in the refractive index of the fluid, detecting the change in the refractive index of the fluid at a location remote from the heating member, and calculating the flow rate of the fluid from the change in the refractive index.

Further background can be found in WO 91/18280 A1, US 2007/044572 A1, US 2011/106397 A1, EP1205736 A2, EP0952431 A2, DE3909621 A1, US 2014/130606 A1, and GB2352033 A.

### Summary of Invention

The present invention provides a method for analyzing a fluid flow according to claim 1 and a fluid flow analyzer according to claim 7.

By monitoring the measurement regions for variations of the refractive index of the fluid, the fluid flow may be analyzed non-intrusively.

In this regard, the term "measurement region", as used throughout the description and the claims, particularly refers to a region around a fixed location through which (at least a part of) the fluid flows. Moreover, a measurement region may be a region (within the fluid flow) which is delimited by parallel or at least partially overlapping beams of electromagnetic radiation. Moreover, the formulation "monitoring a first measurement region for density variations within the fluid", as used throughout the description and the claims, particularly refers to determining whether a fluid volume that passes through the measurement region exhibits a non-uniform density distribution (or a specific density pattern). Hence, the formulation "determining whether a first density variation, which is detected by monitoring the first measurement region, and a second density variation, which is detected by monitoring the second measurement region, match", as used throughout the description and the claims, particularly refers to determining whether (or when) a fluid volume that exhibits a (specific) non-uniform density distribution (or a specific density pattern) passes through the first measurement region and the second measurement region.

The method may further comprise determining a speed of the fluid flow between the first measurement region and the second measurement region based on a time period that passes between a first instant at which the first density variation is detected in the first measurement region and a second instant at which the second density variation is detected in the second measurement region and the distance between the centers of the measurement regions.

For example, the time period may be determined based on calculating a temporal correlation between first density values detected (or measured) within the first measurement region and second density values detected (or measured) within the second measurement region.

The distance between the centers of the first measurement region and the second measurement region may be equal to or less than 100 times, 50 times, 20 times, 10 times or one time a size of the first or second measurement region (along an axis through the centers of the first measurement region and the second measurement region).

The first density variation and the second density variation may be caused, at least in part, by turbulence.

For example, a turbulent flow which is to be analyzed may exhibit a non-uniform temperature distribution (without intrusive heating).

In this regard, the term "intrusive heating" particularly refers to pulsed heating of a location upstream of the first measurement region for (no other purpose than) causing (artificial) temperature variations.

A density variation caused by a temperature variation travels at the speed of the fluid flow, as opposed to sound waves which travel at the speed of sound through the fluid. Hence, monitoring the measurement regions for a density variation within the fluid which is caused by a temperature variation allows determining how long it took the fluid volume carrying the temperature variation to travel from the first measurement region to the second measurement region.

Moreover, if the turbulence is isotropic, sound waves may travel in all directions and hence, the sound waves may not substantially affect (degrade) the monitoring.

Monitoring the first measurement region for variations of the refractive index of the fluid is based on measuring an intensity of interfering electromagnetic waves which travel along different paths through the first measurement region, and monitoring the second measurement region for variations of the refractive index of the fluid is based on measuring an intensity of interfering electromagnetic waves which travel along different paths through the second measurement region.

The distance between the centers of the first measurement region and the second measurement region may be equal to or less than 100 times, 50 times, 20 times, 10 times or one time a distance between focus points of the electromagnetic waves within the first measurement region, or a mean distance between the different paths through the first measurement region.

A shorter distance may facilitate matching, because the temperature gradient may decrease over time as a result of heat conduction from the (relatively) warmer fluid volume to the (relatively) cooler fluid volume.

Determining whether a first density variation, which is detected by monitoring the first measurement region, and a second density variation, which is detected by monitoring the second measurement region, match comprises calculating a temporal correlation between the intensity of the interfering electromagnetic waves which travel along the different paths through the first measurement region and the intensity of the interfering electromagnetic waves which travel along the different paths through the second measurement region.

The method may further comprise determining a speed of sound within the fluid flow from a width of a peak of a function of the calculated temporal correlation.

The method may further comprise monitoring a third measurement region for density variations within the fluid, as the fluid passes the third measurement region, monitoring a fourth measurement region for density variations within the fluid, as the fluid passes the fourth measurement region, and determining whether a third density variation, which is detected by monitoring the third measurement region, and a fourth density variation, which is detected by monitoring the fourth measurement region, match, wherein a first axis passes through the center of the first measurement region and the center of the second measurement region, a second axis passes through the center of the third measurement region and the center of the fourth measurement region, and the first axis and the second axis are not parallel and preferably perpendicular to each other to allow for a two-dimensional analysis of the fluid flow.

The method may further comprise monitoring a fifth measurement region for density variations within the fluid, as the fluid passes the fifth measurement region, monitoring a sixth measurement region for density variations within the fluid, as the fluid passes the sixth measurement region, and determining whether a fifth density variation, which is detected by monitoring the fifth measurement region, and a sixth density variation, which is detected by monitoring the sixth measurement region, match, wherein a third axis passes through the center of the fifth measurement region and the center of the sixth measurement region, the first axis and the third axis are not parallel and preferably perpendicular to each other, and the second axis and the third axis are not parallel and preferably perpendicular to each other to allow for a three-dimensional analysis of the fluid flow.

The computing device of the fluid flow analyzer may be configured to neglect intensity variations and/or local maxima caused by sound waves.

The emitter of the fluid flow analyzer may be a laser and the beams (of electromagnetic radiation) may be laser beams.

The fluid flow analyzer may comprise optical components. The optical components may be configured to split a beam emitted from the emitter and/or focus the resulting beams to a spot in the first and second measurement region, respectively.

For example, the spots may lie on a line of flow to increase the accuracy when determining the speed of the fluid flow.

The computing device may be configured to neglect intensity variations and/or local maxima caused by sound waves by filtering intensity variations that are below a threshold.

The computing device may be configured to determine a speed of the fluid flow between the first measurement region and the second measurement region based on the temporal shift and a distance between the centers of the first measurement region and the second measurement region.

The distance between the centers of the first measurement region and the second measurement region may be equal to or less than 100 times, 50 times, 20 times, 10 times or one time a size of the first measurement region or the second measurement region (along an axis through the centers of the first measurement region and the second measurement regions).

The first, second, third and fourth beam may be derived by splitting a beam emitted by the emitter.

For example, the beam may be split by two Wollaston prisms.

The fluid flow analyzer may further comprise a third measurement region delimited by a fifth optical path of a fifth beam (of electromagnetic radiation) and a sixth optical path of a sixth beam (of electromagnetic radiation), a fourth measurement region delimited by a seventh optical path of a seventh beam (of electromagnetic radiation) and an eighth optical path of an eighth beam (of electromagnetic radiation), a third sensor for detecting a third intensity of the superimposed fifth and sixth beams, and a fourth sensor for detecting a fourth intensity of the superimposed seventh and eighth beams, wherein the computing device is configured to determine a temporal shift at which a correlation between the fourth intensity and the fifth intensity has a local maximum.

The first optical path and the fifth optical path may be not parallel and preferably perpendicular to each other to allow for a two-dimensional analysis of the fluid flow.

It will be appreciated that the features and attendant advantages of the disclosed method may be realized by the disclosed apparatus and vice versa. Moreover, it is noted that throughout the description, features in brackets are to be regarded as optional.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 and Fig. 1a illustrate the operation of a fluid flow analyzer which may be useful for understanding the present invention, but does not form part of the invention.
Fig. 2 ad Fig. 2b illustrate the operation of a fluid flow analyzer according to a first embodiment;
Fig. 3, Fig. 3a, and Fig. 3b illustrate the operation of a fluid flow analyzer according to a second embodiment; and
Fig. 4 shows a flow chart of a method for analyzing a fluid flow.

Notably, the drawings are not drawn to scale and unless otherwise indicated, they are merely intended to conceptually illustrate the structures and procedures described herein.

### Detailed Description

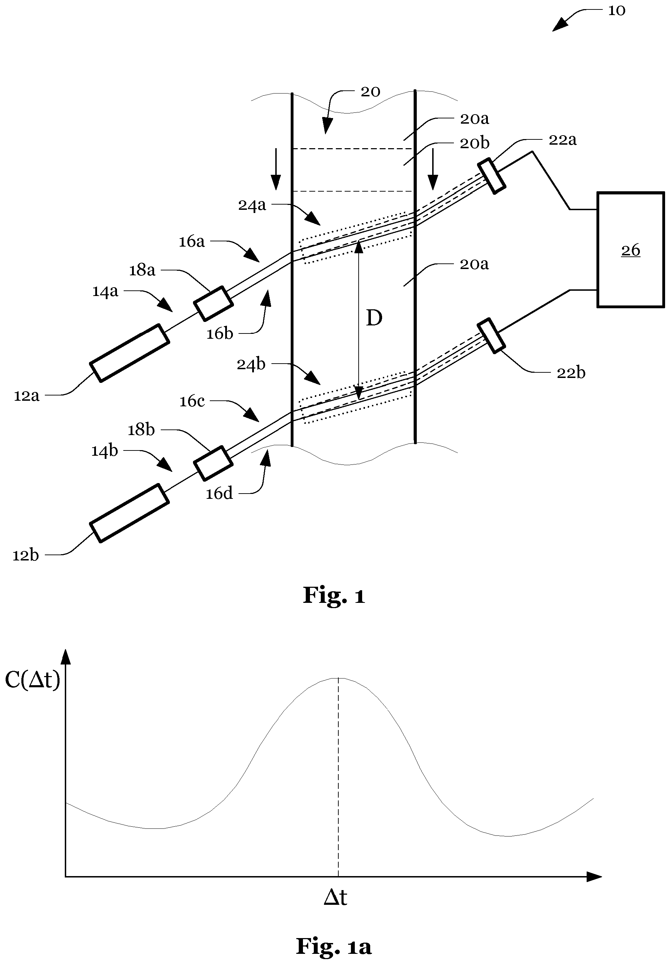

Fig. 1 shows a fluid flow analyzer which does not form part of the invention.

The fluid flow analyzer 10 comprises an emitter 12a (e.g., a laser) which emits a beam 14a of coherent electromagnetic radiation (e.g., a laser beam). The beam 14a is split into a first beam 16a and a second beam 16b by optical components 18a arranged within the optical path of the beam 14a. The first beam 16a and the second beam 16b traverse a fluid flow 20 and generate an interference pattern that is incident on a first sensor 22a.

The intensities detected by the first sensor 22a depend on the density of the fluid. This allows detecting a density variation within a fluid volume that crosses the beams 16a, 16b.

I.e., the bending angles of the first and second beams 16a, 16b depend on the refractive indices of the fluid and its surroundings and thus on the density of the fluid. Because the fluid flow 20 exhibits (relatively) cooler parts 20a and (relatively) warmer parts 20b, the bending angles of the first and second beams 16a, 16b change over time when the fluid passes through the measurement region 24a (schematically illustrated by the broken rectangle). As the first beam 16a and the second beam 16b are displaced from each other in the direction of the fluid flow 20 (indicated by the arrows), there is a delay between the bending pattern exhibited by the first beam 16a and the bending pattern exhibited by the second beam 16b.

This causes a characteristic change in intensity which can be detected by the first sensor 22a on which the interfering first and second beams 16a, 16b incide. Accordingly, the region through which the first and second beams 16a, 16b pass, forms a first measurement region 24a for detecting density variations within the fluid flow 20.

A further measurement region 24b is established downstream by replicating the structure described above. I. e., there is another emitter 12b (e.g., another laser) that emits a beam 14b of coherent electromagnetic radiation (e.g., a laser beam) which is split into a third beam 16c and a fourth beam 16d by optical components 18b arranged within the optical path of the beam 14b. The third beam 16c and the fourth beam 16d traverse the fluid flow 20 and generate an interference pattern that is detected by a second sensor 22b.

Because the fluid flow 20 exhibits (relatively) cooler parts 20a and (relatively) warmer parts 20b, the bending angles of the third and fourth beams 16c, 16d change over time when the fluid passes through the measurement region 24b (schematically illustrated by the broken rectangle). As the third beam 16c and the fourth beam 16d are displaced from each other in the direction of the fluid flow (indicated by the arrows), there is a delay between the bending pattern exhibited by the third beam 16c and the fourth beam 16d.

This causes a characteristic change in intensity which is detected by the second sensor 22b on which the interfering third and fourth beams 16c, 16d incide. Accordingly, the region through which the third and fourth beams 16c, 16d pass, forms a second measurement region 24b for detecting density variations within the fluid flow 20.

The fluid flow analyzer 10 further comprises a computing device 26 for determining a temporal shift Δt at which a correlation C(Δt) between the intensities detected by the sensors 22a, 22b has a local maximum. I. e., the computing device 26 strives at finding matching density variations which allows calculating a speed of the fluid flow by dividing a distance between the measurement regions 24a, 24b by the temporal shift Δt.

In order to avoid that the result is corrupted by the influence of sound waves that cause density variations that travel through the fluid at the speed of sound, the computing device 26 may be configured to neglect intensity variations and/or local maxima caused by sound waves. As the density variations caused by sound waves are often smaller in amplitude than the density variations caused by temperature variations, the computing device 26 may be configured to filter intensity variations that are below a threshold. Moreover, sound waves caused by an isotropic turbulent flow may rather widen a correlation peak than adversely affect the calculation of the speed of the fluid.

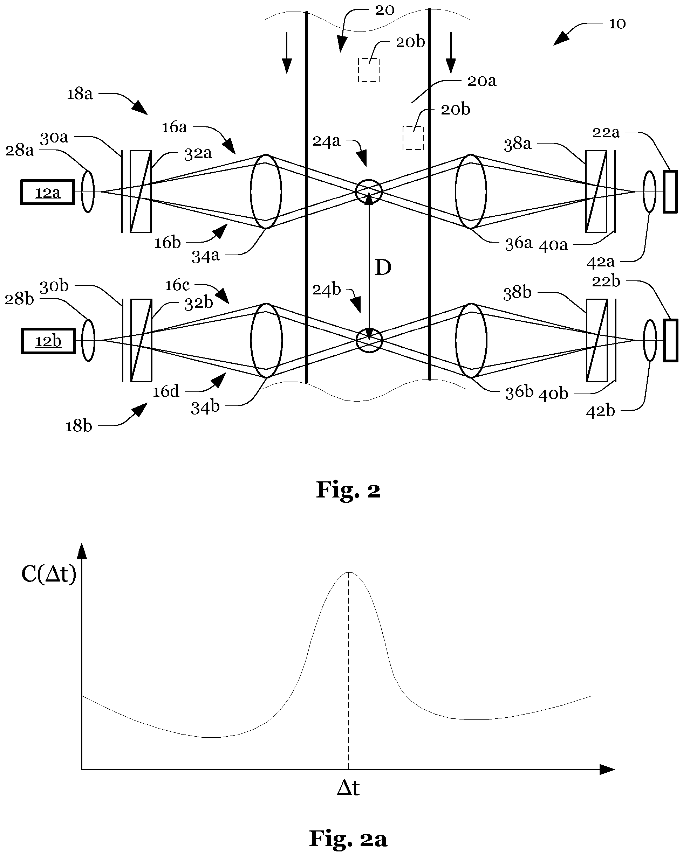

Fig. 2 illustrates a modified fluid flow analyzer 10 which is based on two focused laser differential interferometers, FLDIs and differs from the fluid flow analyzer 10 of Fig. 1 in that the dimensions of the measurement regions 24a, 24b (perpendicular to the direction of flow) are reduced to facilitate matching and to improve spatial resolution (perpendicular to the direction of flow) with regard to determining the speed of the flow by dividing the distance D of the measurement regions 24a, 24b by the temporal shift Δt.

Heretofore, the optical components 18a arranged within the optical path of the beam 14a are replaced by a lens 28a with a short focal length, a quarter wave plate 30a, a Wollaston prism 32a, and a lens 34a that focusses the first and second beams 16a, 16b to different spots within the fluid flow 20. After having traversed the measurement region 24a, the first and second beam 16a, 16b are guided onto the sensor 22a by an inverse optical setting comprising a lens 36a, a Wollaston prism 38a, a quarter wave plate 40a, and a lens 42a with a short focal length.

As in Fig. 1, a further measurement region 24b is established downstream by replicating said structure. I. e., the optical components 18b arranged within the optical path of the beam 14b are replaced by a lens 28b with a short focal length, a quarter wave plate 30b, a Wollaston prism 32b, and a lens 34b that focusses the third and fourth beams 16c, 16d to different spots within the fluid flow 20. After having traversed the measurement region 24b, the third and fourth beam 16c, 16d are guided onto the sensor 22b by an inverse setting comprising a lens 36b, a Wollaston prism 38b, a quarter wave plate 40b, and a lens 42b with a short focal length.

As a difference in optical path length which causes a change in regard to the interference pattern seen by the sensors 22a, 22b mainly results from different densities within the measurement regions 24a, 24b around the focal points, the spatial resolution (perpendicular to the direction of flow) is increased.

The intensity values detected by the sensors 22a, 22b are provided to the computing device 26 which is configured to determine a temporal shift Δt at which a correlation C(Δt) between the intensities detected by the sensors 22a, 22b has a local maximum. The temporal shift indicates the time required for a fluid volume carrying a density variation to travel from the upstream measurement region 24a to the downstream measurement region 24b and allows calculating the speed of the fluid flow between the measurement regions 24a, 24b by dividing the distance D between the (centers of the) measurement regions 24a, 24b by the temporal shift Δt. The Distance (D) between the centers of the measurement regions (24a, 24b) is 0.01 m or less.

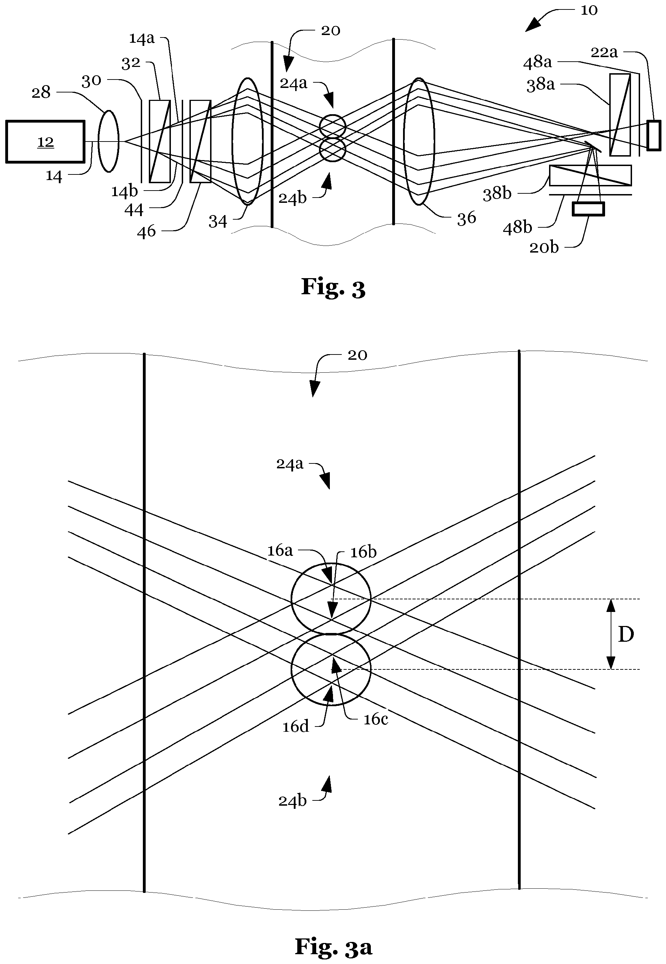

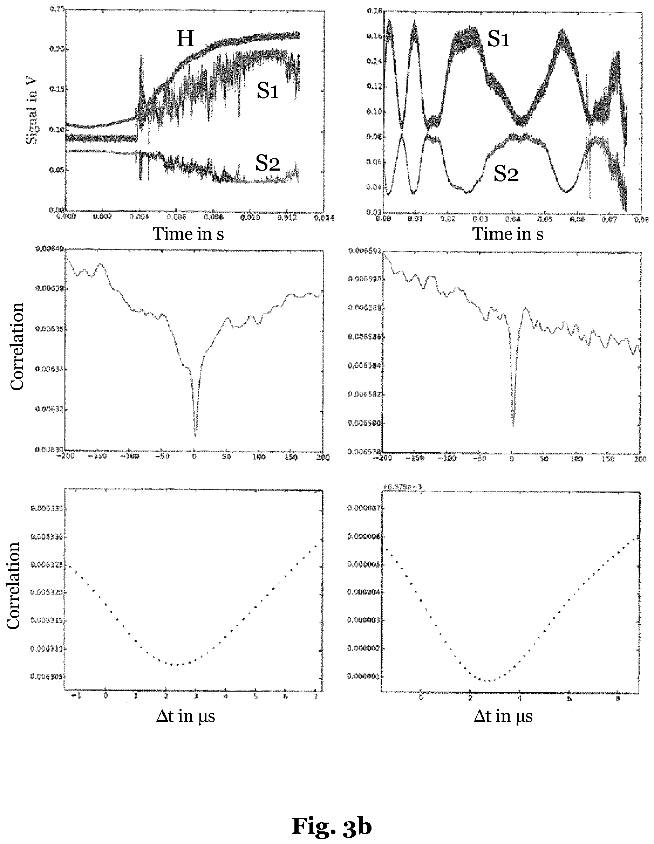

Fig. 3 and Fig. 3a illustrate a modified fluid flow analyzer 10 (that may be used for analyzing supersonic or hypersonic fluid flows 20). The modified fluid flow analyzer 10 differs from the fluid flow analyzer 10 of Fig. 2 in that the distance D between the measurement regions 24a, 24b (in the direction of flow) is reduced to facilitate matching and increase spatial resolution (in the direction of flow) with regard to measuring the speed of the flow. To this end, the beam 14 emitted by the emitter 12 (e.g., a laser) is expanded by a lens 28 with a short focal length and the expanded beam 14 is circularly polarized by a first quarter wave plate 30 that has an optical axis which is rotated by 45° relative to the direction of polarization of the incident beam 14. The circularly polarized expanded beam 14 is then split into two beams 14a, 14b by a first Wollaston prism 32 which may bend the beams 14a, 14b by less than 5 degrees (e.g., two degrees).

Beam 14a is circularly polarized by a second quarter wave plate 44 and split into a first beam 16a and a second beam 16b by a second Wollaston prism 46, wherein the direction of polarization of the first beam 16a may be perpendicular to the direction of polarization of the second beam 16b. Beam 14b is circularly polarized by the second quarter wave plate 44 and split into a third beam 16c and a fourth beam 16d by the second Wollaston prism 46, wherein the direction of polarization of the third beam 16c may be perpendicular to the direction of polarization of the fourth beam 16d. The second Wollaston prism 46 may bend the beams 16a, 16b, 16c, 16d by less than 2.5 degrees (e.g., one degree).

The beams 16a, 16b, 16c, 16d may be focused to spots within the fluid flow 20. To increase the accuracy when determining the speed of the fluid flow 20, the spots may be placed on a line of flow. If a density variation travels along the line of flow, it will be detected subsequently by both sensors 22a, 22b.

After traversing the first measurement region 24a, the first and second beams 16a, 16b incide on a third Wollaston prism 38a and a polarizer 48a and cause an interference pattern on the first sensor 22a (e.g., a photodiode which outputs a signal that is proportional to the intensity of the incident electromagnetic radiation). After traversing the second measurement region 24b, the third and fourth beams 16c, 16d incide on a fourth Wollaston prism 38b and a polarizer 48b and cause an interference pattern on the second sensor 22b (e.g., a photodiode which outputs a signal that is proportional to the intensity of the incident electromagnetic radiation).

As shown in Fig. 3a, a distance D between the (centers of the) measurement regions 24a, 24b may be equal to a distance between the focal points of the first beam 16a and the second beam 16b or to a distance of the focal points of the third beam 16c and the fourth beam 16d. The distance D between the centers of the measurement regions (24a, 24b) is or less. Moreover, by using two or three analyzers that measure along non-parallel (e.g., perpendicular) axes, the speed of the fluid may be measured in two or three dimensions.

Fig. 3b shows graphs from two experiments that are based on the setting described with reference to Fig. 3 and Fig. 3a. The top left graph of Fig. 3b shows a first signal S1 output by the first sensor 22a, a second signal S2 output by the second sensor 22b and a signal H indicating the onset of the fluid flow 20 (from the moment of signal rise). The top right graph of Fig. 3b shows a first signal S1 output by the first sensor 22a and a second signal S2 output by the second sensor 22b. The middle and bottom graphs show the local maxima (peaks) of a correlation function of the first signal S1 and the second signal S2. As shown in Fig. 3b, the analyzer 10 is robust against mechanical shocks, as the frequency of such shocks is typically much smaller than the frequency of the signals S1, S2 which allows filtering mechanical shocks without degrading the accuracy of the analyzer 10.

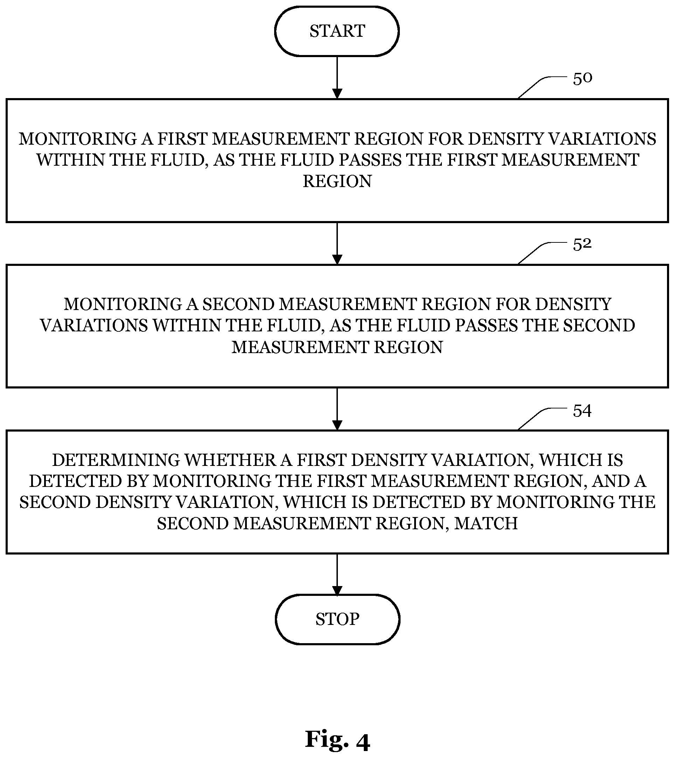

Fig. 4 shows a flow chart of a method for analyzing a fluid flow that may be practiced based on any one of the analyzers 10 of Fig. 1 to Fig. 3. The method starts at step 50 with monitoring the first measurement region 24a for density variations within the fluid, as the fluid passes the first measurement region 24a. For instance, density variations of the fluid passing through the first measurement region 24a may be detected by interferometry. The method continues at step 52 with monitoring the second measurement region 24b for density variations within the fluid, as the fluid passes the second measurement region 24b. For instance, density variations of the fluid passing through the second measurement region 24b may be detected based on interferometry. At step 54, the method ends with determining whether a first density variation, which is detected by monitoring the first measurement region 24a, and a second density variation, which is detected by monitoring the second measurement region 24b, match.

### Reference signs list

- 10: fluid flow analyzer
- 12: emitter
- 12a: emitter
- 12b: emitter
- 14: beam
- 14a: beam
- 14b: beam
- 16a: first beam
- 16b: second beam
- 16c: third beam
- 16d: fourth beam
- 18a: optical components
- 18b: optical components
- 20: fluid flow
- 22a: sensor
- 22b: sensor
- 24a: measurement region
- 24b: measurement region
- 26: computing device
- 28: lens
- 28a: lens
- 28b: lens
- 30: quarter-wave plate
- 30a: quarter-wave plate
- 30b: quarter-wave plate
- 32: Wollaston prism
- 32a: Wollaston prism
- 32b: Wollaston prism
- 34: lens
- 34a: lens
- 34b: lens
- 36: lens
- 36a: lens
- 36b: lens
- 38a: Wollaston prism
- 38b: Wollaston prism
- 40a: quarter-wave plate
- 40b: quarter-wave plate
- 42a: lens
- 42b: lens
- 44: quarter wave plate
- 46: Wollaston prism
- 48a: polarizer
- 48b: polarizer
- 50: process step
- 52: process step
- 54: process step
- D: distance

## Claims

1. A method for analyzing a fluid flow (20), the method comprising:
monitoring (50) a first measurement region (24a) for density variations within the fluid, as the fluid passes the first measurement region (24a), wherein monitoring (50) the first measurement region (24a) for density variations within the fluid comprises monitoring the first measurement region (24a) for variations of the refractive index of the fluid, as the fluid passes the first measurement region (24a);
monitoring (52) a second measurement region (24b) for density variations within the fluid, as the fluid passes the second measurement region (24b), wherein monitoring (52) the second measurement region (24b) for density variations within the fluid comprises monitoring the second measurement region (24b) for variations of the refractive index of the fluid, as the fluid passes the second measurement region (24b);
wherein monitoring the first measurement region (24a) for variations of the refractive index of the fluid is based on interferometry and monitoring the second measurement region (24b) for variations of the refractive index of the fluid is based on interferometry;
**characterized in that**
monitoring the first measurement region (24a) for variations of the refractive index of the fluid is based on measuring an intensity of interfering electromagnetic waves which travel along different paths through the first measurement region (24a);
monitoring the second measurement region (24b) for variations of the refractive index of the fluid is based on measuring an intensity of interfering electromagnetic waves which travel along different paths through the second measurement region (24b); and
determining whether a first density variation, which is detected by monitoring (50) the first measurement region (24a), and a second density variation, which is detected by monitoring (52) the second measurement region (24b), match comprises calculating a temporal correlation between the intensity of the interfering electromagnetic waves which travel along the different paths through the first measurement region (24a) and the intensity of the interfering electromagnetic waves which travel along the different paths through the second measurement region (24b); wherein
the first measurement region (24a) is delimited by a first optical path of a first beam (16a) and a second optical path of a second beam (16b), wherein the first optical path differs from the second optical path; wherein
the second measurement region (24b) is delimited by a third optical path of a third beam (16c) and a fourth optical path of a fourth beam (16d) wherein the third optical path differs from the fourth optical path;
wherein the first and second beams (16a, 16b) are focused to different spots within the fluid flow (20);
wherein the third and fourth beams (16c, 16d) are focused to different spots within the fluid flow (20); and
wherein a distance (D) between centers of the measurement regions (24a, 24b) is 0.01 m or less.

2. The method of claim 1, further comprising:
determining a speed of the fluid flow (20) between the first measurement region (24a) and the second measurement region (24b) based on a time period (Δt) that passes between a first instant at which the first density variation is detected in the first measurement region (24a) and a second instant at which the second density variation is detected in the second measurement region (24b) and the distance (D) between the centers of the measurement regions (24a, 24b).

3. The method of claim 1 or 2,
wherein the first density variation and the second density variation are caused, at least in part, by turbulence; and/or
wherein the first density variation and the second density variation are caused by a temperature variation resulting from said turbulence.

4. The method of claim 1, further comprising:
determining a speed of sound within the fluid flow (20) from a width of a peak of a function of the calculated temporal correlation.

5. The method of any one of claims 1 to 4, further comprising:
monitoring a third measurement region for density variations within the fluid, as the fluid passes the third measurement region;
monitoring a fourth measurement region for density variations within the fluid, as the fluid passes the fourth measurement region; and
determining whether a third density variation, which is detected by monitoring the third measurement region, and a fourth density variation, which is detected by monitoring the fourth measurement region, match;
wherein
a first axis passes through the center of the first measurement region and the center of the second measurement region;
a second axis passes through the center of the third measurement region and the center of the fourth measurement region; and
the first axis and the second axis are not parallel and preferably perpendicular to each other to allow for a two-dimensional analysis of the fluid flow.

6. The method of claim 5, further comprising:
monitoring a fifth measurement region for density variations within the fluid, as the fluid passes the fifth measurement region;
monitoring a sixth measurement region for density variations within the fluid, as the fluid passes the sixth measurement region; and
determining whether a fifth density variation, which is detected by monitoring the fifth measurement region, and a sixth density variation, which is detected by monitoring the sixth measurement region, match;
wherein
a third axis passes through the center of the fifth measurement region and the center of the sixth measurement region;
the first axis and the third axis are not parallel and preferably perpendicular to each other; and
the second axis and the third axis are not parallel and preferably perpendicular to each other to allow for a three-dimensional analysis of the fluid flow.

7. A fluid flow analyzer (10), adapted to perform the method for analyzing a fluid flow (20) of one of claims 1 to 6, comprising:
an emitter (12, 12a, 12b) for emitting electromagnetic radiation;
wherein the fluid flow analyzer (10) is **characterized by**
a first measurement region (24a) delimited by a first optical path of a first beam (16a) and a second optical path of a second beam (16b), wherein the first optical path differs from the second optical path; and
a second measurement region (24b) delimited by a third optical path of a third beam (16c) and a fourth optical path of a fourth beam (16d), wherein the third optical path differs from the fourth optical path;
a first sensor (22a) for detecting a first intensity of first electromagnetic radiation of a first interference pattern caused by the superimposed first and second beams (16a, 16b) on the first sensor (22a);
a second sensor (22b) for detecting a second intensity of second electromagnetic radiation of a second interference pattern caused by the superimposed third and fourth beams (16c, 16d) on the second sensor (22b); and
a computing device (26) for determining a temporal shift (Δt) at which a correlation between the first intensity and the second intensity has a local maximum;
wherein the first and second beams (16a, 16b) are focused to different spots within the fluid flow (20);
wherein the third and fourth beams (16c, 16d) are focused to different spots within the fluid flow (20); and
wherein a distance (D) between centers of the measurement regions (24a, 24b) is 0.01 m or less.

8. The fluid flow analyzer (10) of claim 7,
wherein the computing device (26) is configured to neglect intensity variations and/or local maxima caused by sound waves; or
wherein the computing device (26) is configured to neglect intensity variations and/or local maxima caused by sound waves by filtering intensity variations that are below a threshold.

9. The fluid flow analyzer (10) of claim 7 or 8,
wherein the computing device (26) is configured to determine a speed of the fluid flow (20) between the first measurement region (24a) and the second measurement region (24b) based on the temporal shift (Δt) and the distance (D) between the centers of the first measurement region (24a) and the second measurement region (24b).

10. The fluid flow analyzer (10) of claim 9,
wherein the first, second, third and fourth beam (16a, 16b, 16c, 16d) are derived by splitting a beam (14) emitted by the emitter (12).

## Patentansprüche

1. Verfahren zum Analysieren eines Fluidstroms (20), wobei das Verfahren umfasst:
Überwachen (50) eines ersten Messbereichs (24a) auf Dichteschwankungen innerhalb des Fluids, wenn das Fluid den ersten Messbereich (24a) durchläuft, wobei das Überwachen (50) des ersten Messbereichs (24a) auf Dichteschwankungen innerhalb des Fluids das Überwachen des ersten Messbereichs (24a) auf Schwankungen des Brechungsindex des Fluids umfasst, wenn das Fluid den ersten Messbereich (24a) durchläuft;
Überwachen (52) eines zweiten Messbereichs (24b) auf Dichteschwankungen innerhalb des Fluids, wenn das Fluid den zweiten Messbereich (24b) durchläuft, wobei das Überwachen (52) des zweiten Messbereichs (24b) auf Dichteschwankungen innerhalb des Fluids das Überwachen des zweiten Messbereichs (24b) auf Schwankungen des Brechungsindex des Fluids umfasst, wenn das Fluid den zweiten Messbereich (24b) durchläuft;
wobei das Überwachen des ersten Messbereichs (24a) auf Schwankungen des Brechungsindex des Fluids auf Interferometrie basiert und das Überwachen des zweiten Messbereichs (24b) auf Schwankungen des Brechungsindex des Fluids auf Interferometrie basiert;
**dadurch gekennzeichnet, dass**
das Überwachen des ersten Messbereichs (24a) auf Schwankungen des Brechungsindex des Fluids auf dem Messen einer Intensität von interferierenden elektromagnetischen Wellen basiert, die sich entlang unterschiedlicher Pfade durch den ersten Messbereich (24a) bewegen;
das Überwachen des zweiten Messbereichs (24b) auf Schwankungen des Brechungsindex des Fluids auf dem Messen einer Intensität von interferierenden elektromagnetischen Wellen basiert, die sich entlang unterschiedlicher Pfade durch den zweiten Messbereich (24b) bewegen; und
wobei das Bestimmen, ob eine erste Dichteschwankung, die durch Überwachen (50) des ersten Messbereichs (24a) erkannt wird, und eine zweite Dichteschwankung, die durch Überwachen (52) des zweiten Messbereichs (24b) erkannt wird, übereinstimmen, das Berechnen einer zeitlichen Korrelation zwischen der Intensität der interferierenden elektromagnetischen Wellen, die sich entlang der unterschiedlichen Pfade durch den ersten Messbereich (24a) bewegen, und der Intensität der interferierenden elektromagnetischen Wellen, die sich entlang der unterschiedlichen Pfade durch den zweiten Messbereich (24b) bewegen, umfasst; wobei
der erste Messbereich (24a) durch einen ersten optischen Pfad eines ersten Strahls (16a) und einen zweiten optischen Pfad eines zweiten Strahls (16b) begrenzt wird, wobei sich der erste optische Pfad vom zweiten optischen Pfad unterscheidet; wobei
der zweite Messbereich (24b) durch einen dritten optischen Pfad eines dritten Strahls (16c) und einen vierten optischen Pfad eines vierten Strahls (16d) begrenzt wird, wobei sich der dritte optische Pfad vom vierten optischen Pfad unterscheidet;
wobei der erste und der zweite Strahl (16a, 16b) auf unterschiedliche Punkte innerhalb des Fluidstroms (20) fokussiert sind;
wobei der dritte und der vierte Strahl (16c, 16d) auf unterschiedliche Punkte innerhalb des Fluidstroms (20) fokussiert sind; und
wobei ein Abstand (D) zwischen Mittelpunkten der Messbereiche (24a, 24b) 0,01 m oder weniger beträgt.

2. Verfahren nach Anspruch 1, weiter umfassend:
Bestimmen einer Geschwindigkeit des Fluidstroms (20) zwischen dem ersten Messbereich (24a) und dem zweiten Messbereich (24b) auf Basis einer Zeitspanne (Δt), die zwischen einem ersten Zeitpunkt, zu dem die erste Dichteschwankung im ersten Messbereich (24a) erkannt wird, und einem zweiten Zeitpunkt, zu dem die zweite Dichteschwankung im zweiten Messbereich (24b) erkannt wird, vergeht, und des Abstands (D) zwischen den Mittelpunkten der Messbereiche (24a, 24b).

3. Verfahren nach Anspruch 1 oder 2,
wobei die erste Dichteschwankung und die zweite Dichteschwankung mindestens zum Teil durch Verwirbelung verursacht werden; und/oder
wobei die erste Dichteschwankung und die zweite Dichteschwankung durch eine aus der Verwirbelung resultierende Temperaturschwankung verursacht werden.

4. Verfahren nach Anspruch 1, weiter umfassend:
Bestimmen einer Schallgeschwindigkeit innerhalb des Fluidstroms (20) aus einer Breite einer Spitze einer Funktion der berechneten zeitlichen Korrelation.

5. Verfahren nach einem der Ansprüche 1 bis 4, weiter umfassend:
Überwachen eines dritten Messbereichs auf Dichteschwankungen innerhalb des Fluids, wenn das Fluid den dritten Messbereich durchläuft;
Überwachen eines vierten Messbereichs auf Dichteschwankungen innerhalb des Fluids, wenn das Fluid den vierten Messbereich durchläuft; und
Bestimmen, ob eine dritte Dichteschwankung, die durch Überwachen des dritten Messbereichs erkannt wird, und eine vierte Dichteschwankung, die durch Überwachen des vierten Messbereichs erkannt wird, übereinstimmen;
wobei
eine erste Achse durch den Mittelpunkt des ersten Messbereichs und den Mittelpunkt des zweiten Messbereichs verläuft;
eine zweite Achse durch den Mittelpunkt des dritten Messbereichs und den Mittelpunkt des vierten Messbereichs verläuft; und
die erste Achse und die zweite Achse nicht parallel und vorzugsweise senkrecht zueinander sind, um eine zweidimensionale Analyse des Fluidstroms zu ermöglichen.

6. Verfahren nach Anspruch 5, weiter umfassend:
Überwachen eines fünften Messbereichs auf Dichteschwankungen innerhalb des Fluids, wenn das Fluid den fünften Messbereich durchläuft;
Überwachen eines sechsten Messbereichs auf Dichteschwankungen innerhalb des Fluids, wenn das Fluid den sechsten Messbereich durchläuft; und
Bestimmen, ob eine fünfte Dichteschwankung, die durch Überwachen des fünften Messbereichs erkannt wird, und eine sechste Dichteschwankung, die durch Überwachen des sechsten Messbereichs erkannt wird, übereinstimmen;
wobei
eine dritte Achse durch den Mittelpunkt des fünften Messbereichs und den Mittelpunkt des sechsten Messbereichs verläuft;
die erste Achse und die dritte Achse nicht parallel und vorzugsweise senkrecht zueinander sind; und
die zweite Achse und die dritte Achse nicht parallel und vorzugsweise senkrecht zueinander sind, um eine dreidimensionale Analyse des Fluidstroms zu ermöglichen.

7. Fluidstromanalysegerät (10), das dazu geeignet ist, das Verfahren zum Analysieren eines Fluidstroms (20) nach einem der Ansprüche 1 bis 6 durchzuführen, umfassend:
einen Emitter (12, 12a, 12b) zum Emittieren von elektromagnetischer Strahlung;
wobei das Fluidstromanalysegerät (10) **gekennzeichnet ist durch**
einen ersten Messbereich (24a), der durch einen ersten optischen Pfad eines ersten Strahls (16a) und einen zweiten optischen Pfad eines zweiten Strahls (16b) begrenzt wird, wobei sich der erste optische Pfad vom zweiten optischen Pfad unterscheidet; und
einen zweiten Messbereich (24b), der durch einen dritten optischen Pfad eines dritten Strahls (16c) und einen vierten optischen Pfad eines vierten Strahls (16d) begrenzt wird, wobei sich der dritte optische Pfad vom vierten optischen Pfad unterscheidet;
einen ersten Sensor (22a) zum Erkennen einer ersten Intensität einer ersten elektromagnetischen Strahlung eines ersten Interferenzmusters, das durch den überlagerten ersten und zweiten Strahl (16a, 16b) am ersten Sensor (22a) verursacht wird;
einen zweiten Sensor (22b) zum Erkennen einer zweiten Intensität einer zweiten elektromagnetischen Strahlung eines zweiten Interferenzmusters, das durch den überlagerten dritten und vierten Strahl (16c, 16d) am zweiten Sensor (22b) verursacht wird; und
eine Rechenvorrichtung (26) zum Bestimmen einer zeitlichen Verschiebung (Δt), bei der eine Korrelation zwischen der ersten Intensität und der zweiten Intensität ein lokales Maximum aufweist;
wobei der erste und der zweite Strahl (16a, 16b) auf unterschiedliche Punkte innerhalb des Fluidstroms (20) fokussiert sind;
wobei der dritte und der vierte Strahl (16c, 16d) auf unterschiedliche Punkte innerhalb des Fluidstroms (20) fokussiert sind; und
wobei ein Abstand (D) zwischen Mittelpunkten der Messbereiche (24a, 24b) 0,01 m oder weniger beträgt.

8. Fluidstromanalysegerät (10) nach Anspruch 7,
wobei die Rechenvorrichtung (26) so konfiguriert ist, dass sie durch Schallwellen verursachte Intensitätsschwankungen und/oder lokale Maxima vernachlässigt; oder
wobei die Rechenvorrichtung (26) so konfiguriert ist, dass sie durch Schallwellen verursachte Intensitätsschwankungen und/oder lokale Maxima durch Filtern von Intensitätsschwankungen, die unter einer Schwelle liegen, vernachlässigt.

9. Fluidstromanalysegerät (10) nach Anspruch 7 oder 8,
wobei die Rechenvorrichtung (26) so konfiguriert ist, dass sie eine Geschwindigkeit des Fluidstroms (20) zwischen dem ersten Messbereich (24a) und dem zweiten Messbereich (24b) auf Basis der zeitlichen Verschiebung (Δt) und des Abstands (D) zwischen den Mittelpunkten des ersten Messbereichs (24a) und des zweiten Messbereichs (24b) bestimmt.

10. Fluidstromanalysegerät (10) nach Anspruch 9,
wobei der erste, der zweite, der dritte und der vierte Strahl (16a, 16b, 16c, 16d) durch Aufspalten eines vom Emitter (12) emittierten Strahls (14) abgeleitet werden.

## Revendications

1. Procédé d'analyse d'un écoulement de fluide (20), le procédé comprenant :
la surveillance (50) d'une première région de mesure (24a) pour des variations de densité dans le fluide au fur et à mesure que le fluide passe par la première région de mesure (24a), dans lequel la surveillance (50) de la première région de mesure (24a) pour des variations de densité dans le fluide comprend la surveillance de la première région de mesure (24a) pour des variations de l'indice de réfraction du fluide au fur et à mesure que le fluide passe par la première région de mesure (24a) ;
la surveillance (52) d'une deuxième région de mesure (24b) pour des variations de densité dans le fluide au fur et à mesure que le fluide passe par la deuxième région de mesure (24b), dans lequel la surveillance (52) de la deuxième région de mesure (24b) pour des variations de densité dans le fluide comprend la surveillance de la deuxième région de mesure (24b) pour des variations de l'indice de réfraction du fluide au fur et à mesure que le fluide passe par la deuxième région de mesure (24b) ;
dans lequel la surveillance de la première région de mesure (24a) pour des variations de l'indice de réfraction du fluide est basée sur une interférométrie et la surveillance de la deuxième région de mesure (24b) pour des variations de l'indice de réfraction du fluide est basée sur une interférométrie ;
**caractérisé en ce que**
la surveillance de la première région de mesure (24a) pour des variations de l'indice de réfraction du fluide est basée sur la mesure d'une intensité d'ondes électromagnétiques interférentes qui se propagent le long de différents trajets à travers la première région de mesure (24a) ;
la surveillance de la deuxième région de mesure (24b) pour des variations de l'indice de réfraction du fluide est basée sur la mesure d'une intensité d'ondes électromagnétiques interférentes qui se propagent le long de différents trajets à travers la deuxième région de mesure (24b) ; et
la détermination du fait qu'une première variation de densité, qui est détectée en surveillant (50) la première région de mesure (24a), et qu'une seconde variation de densité, qui est détectée en surveillant (52) la deuxième région de mesure (24b), correspondent comprend le calcul d'une corrélation temporelle entre l'intensité des ondes électromagnétiques interférentes qui se propagent le long des différents trajets à travers la première région de mesure (24a) et l'intensité des ondes électromagnétiques interférentes qui se propagent le long des différents trajets à travers la deuxième région de mesure (24b) ; dans lequel
la première région de mesure (24a) est délimitée par un premier trajet optique d'un premier faisceau (16a) et un deuxième trajet optique d'un deuxième faisceau (16b), dans lequel le premier trajet optique est différent du deuxième trajet optique ; dans lequel
la deuxième région de mesure (24b) est délimitée par un troisième trajet optique d'un troisième faisceau (16c) et un quatrième trajet optique d'un quatrième faisceau (16d), dans lequel le troisième trajet optique est différent du quatrième trajet optique ;
dans lequel les premier et deuxième faisceaux (16a, 16b) sont focalisés sur différents points dans l'écoulement de fluide (20) ;
dans lequel les troisième et quatrième faisceaux (16c, 16d) sont focalisés sur différents points dans l'écoulement de fluide (20) ; et
dans lequel une distance (D) entre des centres des régions de mesure (24a, 24b) est 0,01 m ou moins.

2. Procédé selon la revendication 1, comprenant en outre :
la détermination d'une vitesse de l'écoulement de fluide (20) entre la première région de mesure (24a) et la deuxième région de mesure (24b) sur la base d'une période de temps (Δt) qui s'écoule entre un premier instant auquel la première variation de densité est détectée dans le première région de mesure (24a) et un second instant auquel la deuxième variation de densité est détectée dans la deuxième région de mesure (24b) et de la distance (D) entre les centres des régions de mesure (24a, 24b).

3. Procédé selon la revendication 1 ou 2,
dans lequel la première variation de densité et la deuxième variation de densité sont provoquées, au moins en partie, par une turbulence ; et/ou
dans lequel la première variation de densité et la deuxième variation de densité sont provoquées par une variation de température résultant de ladite turbulence.

4. Procédé selon la revendication 1, comprenant en outre :
la détermination d'une vitesse du son dans l'écoulement de fluide (20) à partir d'une largeur d'un pic d'une fonction de la corrélation temporelle calculée.

5. Procédé selon l'une quelconque des revendications 1 à 4, comprenant en outre :
la surveillance d'une troisième région de mesure pour des variations de densité dans le fluide au fur et à mesure que le fluide passe par la troisième région de mesure ;
la surveillance d'une quatrième région de mesure pour des variations de densité dans le fluide au fur et à mesure que le fluide passe par la quatrième région de mesure ; et
la détermination du fait qu'une troisième variation de densité, qui est détectée en surveillant la troisième région de mesure, et qu'une quatrième variation de densité, qui est détectée en surveillant la quatrième région de mesure, correspondent ;
dans lequel
un premier axe passe par le centre de la première région de mesure et le centre de la deuxième région de mesure ;
un deuxième axe passe par le centre de la troisième région de mesure et le centre de la quatrième région de mesure ; et
le premier axe et le deuxième axe ne sont pas parallèles et, de préférence, perpendiculaires l'un à l'autre pour permettre une analyse bidimensionnelle de l'écoulement de fluide.

6. Procédé selon la revendication 5, comprenant en outre :
la surveillance d'une cinquième région de mesure pour des variations de densité dans le fluide au fur et à mesure que le fluide passe par la cinquième région de mesure ;
la surveillance d'une sixième région de mesure pour des variations de densité dans le fluide au fur et à mesure que le fluide passe par la sixième région de mesure ; et
la détermination du fait qu'une cinquième variation de densité, qui est détectée en surveillant la cinquième région de mesure, et qu'une sixième variation de densité, qui est détectée en surveillant la sixième région de mesure, correspondent ;
dans lequel
un troisième axe passe par le centre de la cinquième région de mesure et le centre de la sixième région de mesure ;
le premier axe et le troisième axe ne sont pas parallèles et, de préférence, perpendiculaires l'un à l'autre ; et
le deuxième axe et le troisième axe ne sont pas parallèles et, de préférence, perpendiculaires l'un à l'autre pour permettre une analyse tridimensionnelle de l'écoulement de fluide.

7. Analyseur d'écoulement de fluide (10), adapté pour effectuer le procédé d'analyse d'un écoulement de fluide (20) selon l'une des revendications 1 à 6, comprenant :
un émetteur (12, 12a, 12b) pour émettre un rayonnement électromagnétique ;
dans lequel l'analyseur d'écoulement de fluide (10) est **caractérisé par**
une première région de mesure (24a) délimitée par un premier trajet optique d'un premier faisceau (16a) et un deuxième trajet optique d'un deuxième faisceau (16b), dans lequel le premier trajet optique est différent du deuxième trajet optique ; et
une deuxième région de mesure (24b) délimitée par un troisième trajet optique d'un troisième faisceau (16c) et un quatrième trajet optique d'un quatrième faisceau (16d), dans lequel le troisième trajet optique est différent du quatrième trajet optique ;
un premier capteur (22a) pour détecter une première intensité d'un premier rayonnement électromagnétique d'un premier motif d'interférence provoqué par les premier et deuxième faisceaux superposés (16a, 16b) sur le premier capteur (22a) ;
un second capteur (22b) pour détecter une seconde intensité d'un second rayonnement électromagnétique d'un second motif d'interférence provoqué par les troisième et quatrième faisceaux superposés (16c, 16d) sur le second capteur (22b) ; et
un dispositif informatique (26) pour déterminer un décalage temporel (At) auquel une corrélation entre la première intensité et la seconde intensité présente un maximum local ;
dans lequel les premier et deuxième faisceaux (16a, 16b) sont focalisés sur différents points dans l'écoulement de fluide (20) ;
dans lequel les troisième et quatrième faisceaux (16c, 16d) sont focalisés sur différents points dans l'écoulement de fluide (20) ; et
dans lequel une distance (D) entre des centres des régions de mesure (24a, 24b) est 0,01 m ou moins.

8. Analyseur d'écoulement de fluide (10) selon la revendication 7,
dans lequel le dispositif informatique (26) est configuré pour négliger des variations d'intensité et/ou des maxima locaux provoqués par des ondes sonores ; ou
dans lequel le dispositif informatique (26) est configuré pour négliger des variations d'intensité et/ou des maxima locaux provoqués par des ondes sonores en filtrant des variations d'intensité qui sont inférieures à un seuil.

9. Analyseur d'écoulement de fluide (10) selon la revendication 7 ou 8,
dans lequel le dispositif informatique (26) est configuré pour déterminer une vitesse de l'écoulement de fluide (20) entre la première région de mesure (24a) et la deuxième région de mesure (24b) sur la base du décalage temporel (At) et de la distance (D) entre les centres de la première région de mesure (24a) et de la deuxième région de mesure (24b).

10. Analyseur d'écoulement de fluide (10) selon la revendication 9,
dans lequel les premier, deuxième, troisième et quatrième faisceaux (16a, 16b, 16c, 16d) sont dérivés en divisant un faisceau (14) émis par l'émetteur (12).
